# EUROPÄISCHE PATENTSCHRIFT

(11) **EP 2 046 612 B1**
(45) Veröffentlichungstag und Bekanntmachung des Hinweises auf die Patenterteilung: **07.09.2011**
(21) Anmeldenummer: 07801152.5
(22) Anmeldetag: 12.07.2007
(51) Int. Cl.: B60S 9/08

(54) **HUBEINRICHTUNG**
LIFTING DEVICE
DISPOSITIF DE LEVAGE

(30) Priorität: 31.07.2006 DE 102006035915
(43) Veröffentlichungstag der Anmeldung: 15.04.2009
(73) Patentinhaber: Haacon Hebetechnik GmbH, 97896 Freudenberg/Main (DE)
(72) Erfinder: BIRKHOLZ, Holger, 97906 Faulbach (DE); DÖLGER, Werner, 97896 Freudenberg (DE); MILTENBERGER, Robert, 63897 Miltenberg (DE); NATTERER, Ralf, 63853 Mömlingen (DE)
(74) Vertreter: Tappe, Hartmut
(86) Internationale Anmeldenummer: PCT/DE2007/001246
(87) Internationale Veröffentlichungsnummer: WO 2008/014745

(56) Entgegenhaltungen:
- EP-A2- 0 513 973
- EP-A2- 0 972 689

## Beschreibung

Die vorliegende Erfindung betrifft eine Hubeinrichtung, insbesondere Sattelstütze oder dergleichen, mit einem Schaftrohr und einem gegenüber dem Schaftrohr verfahrbaren Stützrohr, wobei am Schaftrohr ein Hubgetriebe angeordnet ist, das eine Antriebswellenanordnung zum Anschluss einer Antriebseinrichtung und eine Abtriebswellenanordnung zum Antrieb einer im Stützrohr angeordneten Hubspindel aufweist, die auf eine im Schaftrohr angeordnete Druckplatte wirkt, wobei die Druckplatte oberhalb des Hubgetriebes angeordenet ist.

Hubeinrichtungen der eingangs genannten Art werden in der Anwendung als Sattelstützen beispielsweise als höhenverstellbare Abstützeinrichtungen für sogenannte "Sattelauflieger" verwendet, wenn diese unabhängig von einem Zugfahrzeug abgestellt werden. Bei den bekannten Hubeinrichtungen befindet sich die sogenannte "Druckplatte", die zur Abstützung der Hubspindel gegenüber dem Schaftrohr mit zwischenliegend angeordneter Axiallagereinrichtung dient, im oberen Endbereich der Hubspindel unterhalb des regelmäßig als Kegelrad ausgeführten Hubspindelzahnrads, das zum Antrieb der Hubspindel dient. Darüber hinaus befindet sich regelmäßig auch noch die zum Antrieb des Hubspindelzahnrads dienende Abtriebswellenanordnung des Hubgetriebes oberhalb der Druckplatte. Als Folge hieraus ergibt sich, dass ein wesentlicher Anteil der Bauhöhe einer Hubeinrichtung, die im Wesentlichen durch die Länge des Schaftrohres bestimmt ist, von dem Bereich des Hubgetriebes verbraucht wird, der oberhalb der Druckplatte angeordnet ist. Dieser Bereich kann somit auch nicht mehr zur Aufnahme des Stützrohres, dessen Länge wesentlich ist für die erreichbare Hubhöhe der Hubeinrichtung, genutzt werden. Im Sinne eines möglichst günstigen Hubhöhen-/ Bauhöhenverhältnisses ist es erstrebenswert, die im Schaftrohr aufgenommene Stützrohrlänge möglichst der Schaftrohrlänge anzunähern.

Aus der gattungsbildenden EP 1 236 630 A1 ist eine Hubeinrichtung mit einem gegenüber einem Schaftrohr verfahrbaren Stützrohr bekannt, wobei am Schaftrohr ein Hubgetriebe angeordnet ist, das eine Antriebswellenanordnung zum Anschluss einer Antriebseinrichtung und einer Abtriebswellenanordnung zum Antrieb einer im Stützrohr angeordneten Hubspindel aufweist. Die Hubspindel der bekannten Hubeinrichtung wirkt auf eine im Schaftrohr angeordnete Druckplatte, die sich oberhalb des Hubgetriebes befindet.

Der vorliegenden Erfindung liegt daher die Aufgabe zugrunde, eine Hubeinrichtung vorzuschlagen, die ein verbessertes Hubhöhen-/ Bauhöhenverhältnis aufweist.

Zur Lösung dieser Aufgabe weist die erfindungsgemäße Hubeinrichtung die Merkmale des Anspruchs 1 auf.

Die erfindungsgemäße Hubeinrichtung ermöglicht

eine insgesamt sehr raumsparende Anordnung des Hubgetriebes bei gleichzeitiger maximal Überdeckung zwischen dem Stützrohr und dem Schaftrohr dadurch, dass die Abtriebswelle des auf die Hubspindel wirkenden Hubgetriebes quer zur Hubspindel angeordnet ist und mit ihrem der Hubspindel zugewandten Wellenende in einer ersten Lageraufnahme einer zur Hubspindel koaxial angeordneten Lagereinrichtung aufgenommen ist.

Aufgrund der Lagereinrichtung wird eine innere Lagerstelle der Abtriebswellenanordung unabhängig von der Rohrwandung des Schaftrohres möglich, so dass sich die Abtriebswellenanordnung nur noch bis hin zur Hubspindel erstrecken muss und nicht mehr über die Hubspindel hinaus bzw. an dieser vorbei.

Wenn darüber hinaus die Lagereinrichtung zur Aufnahme von einem der Hubspindel zugewandten Wellenende einer fluchtend mit der Antriebswellenanordnung angeordneten Verbindungswelle eine zweite Lageraufnahme aufweist, die beabstandet von der ersten Lageraufnahme durch eine in der Lagereinrichtung ausgebildete Hubspindeldurchführung und fluchtend mit der ersten Lageraufnahme angeordnet ist, kann trotz der lediglich auf einer Seite der Hubspindel angeordneten Abtriebswellenanordnung eine mit der Abtriebswelle fluchtende Verbindungswelle vorgesehen werden, die in an sich bekannter Weise zur Verbindung einer ersten Hubeinrichtung mit einer zweiten Hubeinrichtung eines einander gegenüberliegend an einem Fahrzeugchassis angeordneten Hubeinrichtungspaares dient.

Als besonders vorteilhaft erweist es sich, wenn die ohnehin zur Durchführung der Hubspindel benötigte Hubspindeldurchführung mit einer radialen Lageraufnahme versehen ist, so dass die Lagereinrichtung nicht nur zur Lagerung der Abtriebswellenanordnung und der Verbindungswelle, sondern darüber hinaus auch zur radialen Führung der Hubspindel dienen kann.

Wenn die Anordnung bzw. Fixierung der Lagereinrichtung im Schaftrohr über eine Verbindung mit der Druckplatte erfolgt, ist lediglich eine axiale Fixierung der Lagereinrichtung im Schaftrohr realisiert, so dass keine mechanische Verbindung der Lagereinrichtung zum Schaftrohr mit entsprechender Beeinträchtigung der Überdeckung zwischen dem Stützrohr und dem Schaftrohr notwendig ist.

Wenn darüber hinaus die Lagereinrichtung derart ausgebildet ist, dass zwischen der Hubspindeldurchführung und der Druckplatte ein Aufnahmeraum zur Aufnahme eines am Hubspindelende angeordneten Hubspindelzahnrads und eines zwischen dem Hubspindelzahnrad und der Druckplatte angeordneten Axiallagers angeordnet ist, bildet die Lagereinrichtung quasi einen innen liegenden Getriebekäfig, der verbunden mit der Druckplatte eine Getriebeeinheit definiert, die zusätzlich zur Aufnahme des Hubspindelzahnrads und des Axiallagers dient. Eine derart kompakte Anordnung ermöglicht insbesondere eine vereinfachte und damit zuverlässige Schmiermittelversorgung.

Wenn das Hubspindelende und die Druckplatte über eine axial wirkende Sicherungseinrichtung miteinander verbunden sind, ist die Lagereinrichtung im Fahrbetrieb, in der sich die Hubeinrichtung in ihrer Verlastungskonfiguration findet, lastfrei, da die gesamten Gewichtskräfte, die sich aus dem Stützrohr und der Hubspindel samt Hubgetriebe einschließlich der am unteren Ende des Stützrohres angeordneten Fußeinrichtung zusammensetzen, von der Sicherungseinrichtung unter Umgehung der Lagereinrichtung auf das Schaftrohr übertragen werden. Hierdurch ist es insbesondere möglich, die Lagereinrichtung aus einem Kunststoffmaterial, beispielsweise in einem Spritzgießverfahren oder Ähnlichem hergestellt, auszuführen.

Als besonders vorteilhaft, da entsprechend einfach realisierbar, erweist es sich, wenn die Sicherungseinrichtung einen mit einem Ende in der Druckplatte und mit dem anderen Ende in der Schaftrohrwandung aufgenommenen und tangential durch eine Ringnut am Hubspindelende geführten Sicherungsstift aufweist.

Nachfolgend wird eine bevorzugte Ausführungsform der Hubeinrichtung anhand der Zeichnung näher erläutert. Es zeigen:
- **Fig. 1**: eine Hubeinrichtung in Vorderansicht;
- **Fig. 2**: die in **Fig. 1** dargestellte Hubeinrichtung in einer Schnittdar- stellung längs Schnittlinienverlauf II-II in **Fig. 1****;**
- **Fig. 3**: ein Schaftrohr der in **Fig. 1** dargestellten Hubeinrichtung im Querschnitt;
- **Fig. 4**: eine alternative Querschnittsausbildung des in **Fig. 3** darge- stellten Schaftrohr-Querschnitts;
- **Fig. 5**: eine Lagereinrichtung für ein Hubgetriebe in perspektivischer Darstellung;
- **Fig. 6**: die in Fig. 5 dargestellte Lagereinrichtung in Schnittdarstel- lung gemäß Schnittlinienverlauf VI-VI in Fig. 5.

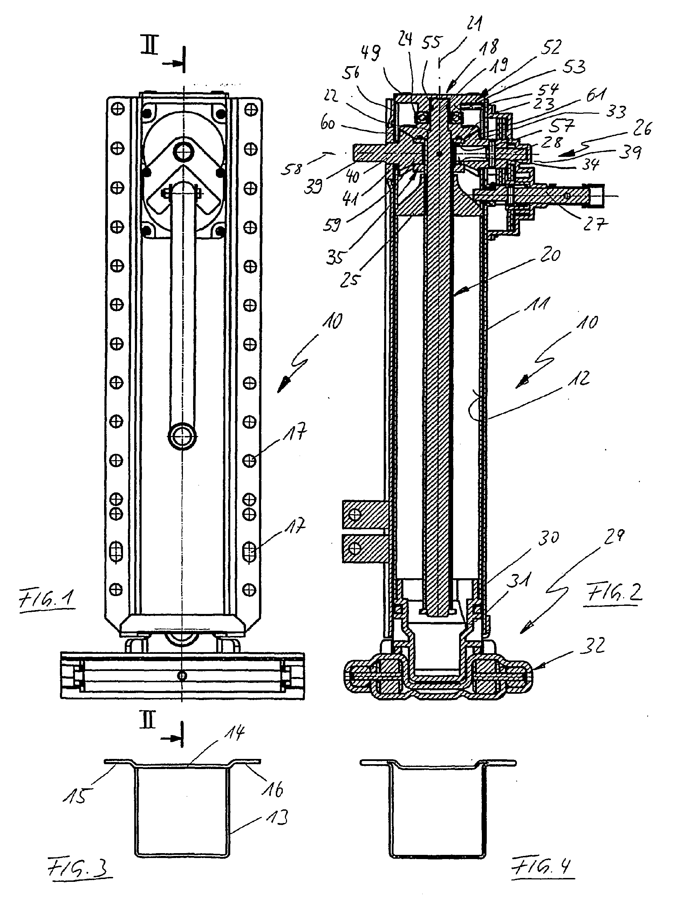

Aus einer Zusammenschau der **Fig. 1** und **2** ergibt sich der Aufbau einer Hubeinrichtung 10 mit einem Schaftrohr 11 und einem koaxial im Schaftrohr 11 angeordneten Stützrohr 12. Das Schaftrohr 11 ist gemäß dem in **Fig. 3** ausgeführten Ausführungsbeispiel aus einem U-förmigen Schaftrohrprofil 13 und einer das Profil 13 zu einem Vierkantrohr ergänzenden Montageplatte 14 zusammengesetzt, die gleichzeitig die Rückwand des Schaftrohrs 11 bildet. Die Montageplatte 14 dient zum Anschluss an ein Fahrzeugchassis und weist an seitlich ausgebildeten Anschlussleisten 15, 16 eine Vielzahl von Montagebohrungen 17 auf, die eine Verbindung an unterschiedlich ausgebildeten Fahrzeugchassis bzw. in unterschiedlichen Montagehöhen an einem Fahrzeugschassis ermöglichen.

Wie sich insbesondere aus der in **Fig. 2** gezeigten Schnittdarstellung ergibt, erstreckt sich das im Schaftrohr 11 aufgenommene Stützrohr 12 im Wesentlichen über die gesamte Länge des Schaftrohrs 11. Wie aus **Fig. 2** ferner ersichtlich, weist das Schaftrohr 11 quasi als stirnseitigen Abschluss eine Druckplatte 18 auf, die zur Aufnahme eines oberen Hubspindelendes 19 einer Hubspindel 20 dient, die sich auf einer Längsachse 21 der Hubeinrichtung 10 bzw. des Stützrohrs 12 erstreckt. Am oberen Hubspindelende 19 befindet sich ferner ein auf einem Wellenbund 22 drehfest angeordnetes Hubspindelzahnrad 23, das zum Antrieb der Hubspindel 20 dient und sich zusammen mit der Hubspindel 20 über ein Axiallager 24 an der Druckplatte 18 abstützt.

Auf der Hubspindel 20 ist eine Spindelmutter 25 angeordnet, die an ihrem Umfang drehstarr mit dem Stützrohr 12 verbunden ist, so dass eine Rotation der Hubspindel 20 in Folge eines Antriebs des Hubspindelzahnrads 23 über den Gewindeeingriff der Hubspindel 20 mit der Spindelmutter 25 je nach Drehrichtung ein Ausfahren oder Einfahren des Stützrohrs 12 aus dem Schaftrohr 11 hinaus oder in dieses hinein bewirkt.

Zum Antrieb des Hubspindelzahnrads 23 dient ein unterhalb der Druckplatte 18 angeordnetes Hubgetriebe 26, das eine Antriebswellenanordnung 27 und eine Abtriebswellenanordnung 28, die auf das Hubspindelzahnrad 23 wirkt, umfasst.

Am unteren Ende des Stützrohres 12 befindet sich eine Fußeinrichtung 29, die eine mit einem unteren Stirnende 30 des Stützrohres 12 verbundene Fußaufnahme 31 sowie einen mit der Fußaufnahme 31 verbundenen Schwenkfuß 32 aufweist.

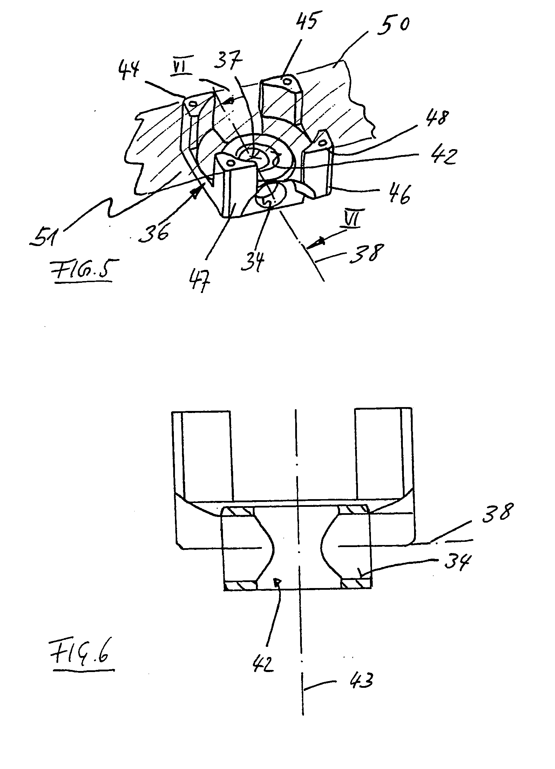

Wie aus **Fig. 2** ersichtlich, ist die Abtriebswellenanordnung 28, auf der sich ein, hier zur Ausbildung eines Hubspindelkegelradgetriebes ebenfalls als Kegelrad ausgebildetes Hubspindelantriebszahnrad 33 drehstarr angeordnet befindet, mit einem der Hubspindel 20 zugewandten, inneren Wellenende 57 in einer Lageraufnahme 34 einer Lagereinrichtung 35 aufgenommen. Die Lagereinrichtung 35 weist, wie in den Fig. 5 und 6 dargestellt, in einem im Wesentlichen scheibenförmigen Lagerkörper 36 neben der Lageraufnahme 34 eine gegenüberliegend dieser ausgebildete Lageraufnahme 37 auf, die auf einer Lagerachse 38 fluchtend mit der Lageraufnahme 34 angeordnet ist. Die Lagerachse 38 stimmt mit einer in **Fig. 2** dargestellten Wellenachse 58 überein, auf der fluchtend neben der Abtriebswellenanordnung 28 noch eine Verbindungswelle 39 angeordnet ist, die mit einem Wellenende 59 in der Lageraufnahme 37 und mit einem Lagerbund 40 in einem in der Montageplatte 14 angeordneten, vorzugsweise aus Kunststoff gefertigten Wellenlager 41 gelagert ist.

Neben den auf der Lagerachse 38 angeordneten Lageraufnahmen 34 und 37 ist im Lagerkörper 36 ein Hubspindelradiallager 42 ausgebildet mit einer Lagerachse 43 (Fig. 6), die konzentrisch zur Hubspindelachse und quer zur Lagerachse 38 ausgerichtet ist.

Parallel zur Lagerachse 43 erstrecken sich vom Lagerkörper 36 nach oben vier Anschlussstege 44, 45, 46 und 47, die zur mechanischen Verbindung des Lagerkörpers 36 der Lagereinrichtung 35 mit der Druckplatte 18 dienen. Hierzu weisen die Anschlussstege 44 bis 47 jeweils an ihrem nach oben weisenden Stirnende eine Verbindungsbohrung 48 auf, die vermittels in der Druckplatte 18 angeordneter Gewindebolzen 49 **(****Fig. 2****)** eine lösbare Verbindung mit der Druckplatte 18 ermöglicht.

Zwischen den Anschlussstegen 44 bis 47 bzw. dem Lagerkörper 36 und einer durch die Stirnenden der Anschlussstege 44 bis 47 definierten Verbindungsebene 50 ist ein Getrieberaum 51 ausgebildet, der, wie in **Fig. 2** dargestellt, die Anordnung des Hubspindelzahnrads 23 und des Axiallagers 24 innerhalb der Lagereinrichtung 35 ermöglicht.

Zur Entlastung der Lagereinrichtung 35 von Gewichtskräften ist zwischen der Druckplatte 18 und dem Hubspindelende 19 der Hubspindel 20 eine axiale Sicherungseinrichtung 52 vorgesehen. Die Sicherungseinrichtung 52 weist einen durch eine hier nicht näher dargestellte Bohrung in einem Hubspindelaufnahmebund 53 der Druckplatte 18 quer zur Hubspindelachse hindurchgeführten Tangentialstift 54 auf, der tangential durch eine umlaufend am Hubspindelende 19 gebildete Ringnut 55 hindurchgeführt ist und so die Gewichtskräfte aufnimmt.

Wie deutlich aus **Fig. 2** zu ersehen ist, reicht das im Schaftrohr 11 aufgenommene Stützrohr 12 mit seinem oberen Stirnende 56 bis an die den oberen stirnseitigen Abschluss des Schaftrohrs 11 bildende Druckplatte 18 heran. Um dies zu ermöglichen, weist das Stützrohr sich zum Stirnende 56 erstreckende, schlitzförmige Ausnehmungen 60, 61 für die Verbindungswelle 39 und die Abtriebswellenanordnung 28 auf, die sich jeweils aus dem Stützrohr 12 durch die Wandung des Schaftrohrs 11 hindurch nach außen erstrecken.

## Patentansprüche

1. Hubeinrichtung (10), insbesondere Sattelstütze oder dergleichen, mit einem Schaftrohr (11) und einem gegenüber dem Schaftrohr verfahrbaren Stützrohr (12), wobei am Schaftrohr ein Hubgetriebe (26) angeordnet ist, das eine Antriebswellenanordnung (27) zum Anschluss einer Antriebseinrichtung und eine Abtriebswellenanordnung (28) zum Antrieb einer im Stützrohr angeordneten Hubspindel (20) aufweist, die auf eine im Schaftrohr angeordnete Druckplatte (18) wirkt, wobei die Druckplatte oberhalb des Hubgetriebes angeordnet ist,
**dadurch gekennzeichnet,**
**dass** die Abtriebswellenanordnung (28) quer zur Hubspindel (20) angeordnet ist und mit ihrem der Hubspindel zugewandten Wellenende (57) in einer ersten Lageraufnahme (34) einer zur Hubspindel koaxial angeordneten Lagereinrichtung (35) aufgenommen ist.

2. Hubeinrichtung nach Anspruch 1,
**dadurch gekennzeichnet,**
**dass** die Lagereinrichtung (35) zur Aufnahme von einem der Hubspindel (20) zugewandten Wellenende (59) einer fluchtend mit der Abtriebswellenanordnung (28) angeordneten Verbindungswelle (39) eine zweite Lageraufnahme (37) aufweist, die beabstandet von der ersten Lageraufnahme (34) durch eine in der Lagereinrichtung ausgebildete Hubspindeldurchführung und fluchtend mit der ersten Lageraufnahme angeordnet ist.

3. Hubeinrichtung nach Anspruch 2,
**dadurch gekennzeichnet,**
**dass** die Hubspindeldurchführung als ein Hubspindelradiallager (42) zur radialen Führung der Hubspindel (20) ausgebildet ist.

4. Hubeinrichtung nach einem der Ansprüche 2 oder 3,
**dadurch gekennzeichnet,**
**dass** die Lagereinrichtung (35) zur Einleitung der Lagerkräfte in das Schaftrohr (11) mit der Druckplatte (18) verbunden ist.

5. Hubeinrichtung nach einem der Ansprüche 2 bis 4,
**dadurch gekennzeichnet,**
**dass** die Lagereinrichtung (35) zwischen der Hubspindeldurchführung und der Druckplatte (18) einen Aufnahmeraum (51) zur Aufnahme eines am Hubspindelende (19) angeordneten Hubspindelzahnrads (23) und eines zwischen dem Hubspindelzahnrad und der Druckplatte angeordneten Axiallagers (24) aufweist.

6. Hubeinrichtung nach einem der vorangehenden Ansprüche,
**dadurch gekennzeichnet,**
**dass** das Hubspindelende (19) und die Druckplatte (18) über eine axial wirkende Sicherungseinrichtung miteinander verbunden sind.

7. Hubeinrichtung nach Anspruch 6,
**dadurch gekennzeichet,**
dass die Sicherungseinrichtung einen mit seinem Ende in der Druckplatte (18) aufgenommenen und tangential durch eine Ringnut (55) am Hubspindelende (19) geführten Sicherungsstift (54) aufweist.

## Claims

1. A lifting device (10), in particular a semitrailer support or the like, comprising a shank tube (11) and a support tube (12) which is movable with respect to the shank tube, wherein on the shank tube a lifting gear mechanism (26) is arranged which comprises an input shaft arrangement (27) for connecting a drive device, and an output shaft arrangement (28) for driving a lifting spindle (20) which is arranged within the support tube and which acts on a pressure plate (18) arranged within the shank tube, wherein the pressure plate is located above the lifting gear mechanism,
**characterized in that**
the output shaft arrangement (28) is arranged transversely to the lifting spindle (20), and is received with its shaft end (57) facing towards the lifting spindle in a first bearing receptacle (34) of a bearing device (35) arranged coaxially to the lifting spindle.

2. The lifting device according to claim 1,
**characterized in that**
the bearing device (35) for receiving a shaft end (59), with the shaft end facing towards the lifting spindle (20), of a connection shaft (39) arranged aligned with the output shaft arrangement (28) comprises a second bearing receptacle (37), which is arranged spaced apart from the first bearing receptacle (34) through a lifting spindle passage formed in the bearing device, and which is aligned with the first bearing receptacle.

3. A lifting device according to claim 2,
**characterized in that**
the lifting spindle passage is formed as a lifting spindle radial bearing (42) for radial guidance of the lifting spindle (20).

4. A lifting device according to any one of the claims 2 or 3,
**characterized in that**
the bearing device (35), for transmission of the forces into the shank tube (11), is connected with the pressure plate (18).

5. A lifting device according to any one of the claims 2 to 4,
**characterized in that**
the bearing device (35) comprises between the lifting spindle passage and the pressure plate (18) a receiving space (51) for receiving a lifting spindle gearwheel (23) arranged at the lifting spindle end (19), and an axial bearing (24) arranged between the lifting spindle gearwheel and the pressure plate.

6. A lifting device according to any one of the preceding claims,
**characterized in that**
the lifting spindle end (19) and the pressure plate (18) are connected with one another by means of an axially acting locking device.

7. The lifting device according to claim 6,
**characterized in that**
the locking device comprises a locking pin (54) which is received with its end in the pressure plate (18), and which is inserted tangentially through a ring groove (55) at the lifting spindle end (19).

## Revendications

1. Dispositif de levage (10), notamment un support de remorque ou similaire, comprenant un tube de tige (11) et un tube de support (12) déplaçable par rapport au tube de tige, un mécanisme de levage (26) étant disposé au tube de tige et présentant un agencement d'arbre d'entraînement (27) pour le raccordement d'un dispositif d'entraînement et un agencement d'arbre de sortie (28) pour l'entraînement d'une broche de levage (20) étant disposée dans le tube de support et s'appuyant sur une plaque de pression (18) qui est disposée dans le tube de tige, la plaque de pression étant agencée au dessus du mécanisme de levage,
**caractérisé en ce que**
l'agencement d'arbre de sortie (28) est disposé transversalement par rapport à la broche de levage (20) et avec son extrémité d'arbre (57) tournée vers la broche de levage est logé dans un premier logement de palier (34) d'un dispositif de palier (35) étant disposé de manière coaxiale par rapport à la broche de levage.

2. Dispositif selon la revendication 1,
**caractérisé en ce que**
le dispositif de palier (35) présente un second logement de palier (37) pour recevoir une extrémité d'arbre (59) tournée vers la broche de levage (20) et faisant partie d'un arbre de connexion (39) qui est en alignement avec l'agencement d'arbre de sortie (28), ledit second logement de palier étant disposé avec un écart par rapport au premier logement de palier (34) de façon à passer par un passage de la broche de levage formé dans le dispositif de palier et étant disposé en alignement avec le premier logement de palier.

3. Dispositif de levage selon la revendication 2,
**caractérisé en ce que**
le passage de la broche de levage est formé en tant que palier radial (42) de la broche de levage pour guider la broche de levage (20) radialement.

4. Dispositif de levage selon l'une quelconque des revendications 2 ou 3,
**caractérisé en ce que**
le dispositif de palier (35) est relié avec la plaque de pression (18) afin de permettre l'introduction des forces de palier dans le tube de tige (11).

5. Dispositif de levage selon l'une quelconque des revendications 2 à 4,
**caractérisé en ce que**
le dispositif de palier (35) entre le passage de la broche de levage et la plaque de pression (18) présente un logement (51) pour recevoir une roue dentée (23) de la broche de levage disposée à l'extrémité (19) de la broche de levage et un palier axial (24) disposé entre la roue dentée de la broche de levage et la plaque de pression.

6. Dispositif de levage selon l'une quelconque des revendications précédentes,
**caractérisé en ce que**
l'extrémité (19) de la broche de levage et la plaque de pression (18) sont reliées entre elles par l'intermédiaire d'un dispositif de sécurité agissant en direction axiale.

7. Dispositif de levage selon la revendication 6,
**caractérisé en ce que**
le dispositif de sécurité présente une goupille de sécurité (54) étant reçue avec son extrémité dans la plaque de pression (18) et étant guidée de manière tangentielle à travers une rainure annulaire (55) à l'extrémité (19) de la broche de levage.
